# EUROPEAN PATENT SPECIFICATION

(11) **EP 4 621 961 B1**
(45) Date of publication and mention of the grant of the patent: **25.11.2026**
(21) Application number: 24164305.5
(22) Date of filing: 18.03.2024
(51) Int. Cl.: H01M 50/249, H01M 50/30, H01M 50/333, H01M 50/342, H01M 50/375

(54) **BATTERY PACK THERMAL MANAGEMENT SYSTEM**
WÄRMEVERWALTUNGSSYSTEM FÜR BATTERIEPACK
SYSTÈME DE GESTION THERMIQUE DE BLOC-BATTERIE

(43) Date of publication of application: 24.09.2025
(73) Proprietor: Hamilton Sundstrand Corporation, Charlotte, NC 28217-4578 (US)
(72) Inventor: BENN, Andrew, Kenilworth, CV8 1DA (GB)
(74) Representative: Dehns

(56) References cited:
- EP-A1- 4 106 083
- EP-A1- 4 386 936
- DE-A1- 102012 211 827
- US-A1- 2008 166 625
- US-A1- 2023 011 662
- US-A1- 2023 166 142

## Description

### TECHNICAL FIELD

The present invention relates to a system and method for thermal management of aircraft battery packs, in particular to a system and method including a vent system.

### BACKGROUND

Electric energy storage and power solutions are becoming increasingly desirable in the aviation industry, especially in electric and hybrid propulsion systems. These systems often require batteries which are integrated into an aircraft and are operational during flight as well as taxi, take-off and landing (TTOL). Aircraft batteries may therefore be exposed to a wide range of ambient conditions (e.g. temperature, pressure, humidity) during operation, and any such changes may occur unexpectedly and/or over short time intervals.

Improved battery safety performance is a growing consideration as the capacity and energy density of batteries increases. Existing battery vent systems (e.g. in automotive applications) typically employ safety vents such as burst membranes to enable release of gases which build up inside the battery during thermal runaway.

Additional challenges arise when implementing battery vent systems in aircraft environments, wherein the ambient conditions are subject to rapid and extreme changes. Existing battery vent systems are limited by burst pressures and rely on slow changes in ambient pressure. For example, applying a typical burst pressure of 300-400 mbar (30-40 kPa) to existing vent systems could result in mechanical fatigue over repeated cycles and/or accidental rupture of the burst membrane for an aircraft climbing to 30,000 ft (9144 m). In such scenarios, the battery pack may be exposed to undesirable ambient conditions including low temperature, low pressure and high humidity.

It is therefore desirable to provide a system and method of operation thereof which reduces the effects of thermal runaway occurring in a battery pack on an aircraft. DE 10 2012 211827 A1 discloses a battery housing having a wall with an opening and a pressure relief valve.

### SUMMARY

According to the present invention, there is provided a thermal management system for high-flow venting of a battery pack, the thermal management system comprising: a vent chamber; a pressure release mechanism; a connection for a battery pack to be connected to the vent chamber via the pressure release mechanism; an inlet valve for connecting an inlet air source to the vent chamber; an outflow pressure release system for connecting the vent chamber to an external environment; wherein the outflow pressure release system is configured to: permit an outflow of gas from the vent chamber to the external environment at up to a first flow rate when the pressure in the vent chamber is less than a release pressure; and permit an outflow of gas from the vent chamber to the external environment at greater than a second flow rate when the pressure in the vent chamber is greater than or equal to the release pressure, wherein the second flow rate is greater than the first flow rate. The inlet valve and the outflow pressure release system are configured to maintain the pressure in the vent chamber above an operational pressure.

The thermal management system may be configured to control and/or regulate the flow of gases from and surrounding the battery pack. The thermal management system may be located on an aircraft or any other suitable vehicle.

In some examples, the thermal management system comprises a battery pack, wherein the battery pack comprises at least one battery cell. The battery pack may be connected to the connection of the thermal management system. Thus, the battery pack may be connected to the vent chamber via the pressure release mechanism.

The battery pack may comprise a single-piece or multi-piece housing containing the at least one battery cell. The battery pack may contain any number of battery cells, which may be identical. The at least one battery cell may be suitable for use in (e.g. powering) at least one aircraft electrical system. Multiple of the at least one battery cell of the battery pack may be electrically interconnected in series and/or parallel to achieve a desired voltage and/or energy capacity for a particular use.

The at least one battery cell may release hot gas and/or particulates in a thermal runaway event. The gases released during a thermal runaway event may comprise at least one of hydrogen, carbon monoxide, carbon dioxide and hydrocarbon gases. The gases released during a thermal runaway event may be flammable and/or noxious. The battery pack may be sealed.

The at least one battery cell may comprise any of a variety of different cell types, chemistries and configurations including, but not limited to, lithium ion (e.g., lithium iron phosphate, lithium cobalt oxide, other lithium metal oxides), lithium ion polymer, nickel metal hydride, nickel cadmium, nickel hydrogen, nickel zinc and silver zinc.

The vent chamber may comprise a housing defining a chamber. The vent chamber and the battery pack may be physically separate. The vent chamber may encompass the battery pack within its chamber. The vent chamber may be structurally integrated with the battery pack and the pressure release mechanism (e.g. within a housing) to form a single module. The vent chamber and the battery pack may be in fluid communication with each other only through the pressure release mechanism. The fluid flow provided by the pressure release mechanism from the vent chamber to the battery pack may define a vent path.

In some examples, the pressure release mechanism is configured to: block a flow from the battery pack to the vent chamber when the pressure in the battery pack is less than a burst pressure; and relieve the burst pressure from the battery pack to the vent chamber when the pressure in the battery pack is greater than or equal to the burst pressure.

The pressure release mechanism may comprise a burst membrane, e.g. a rupture disc, a pressure safety disc, a burst disc, a burst diaphragm, a pressure relief valve or any other safety device designed to protect against overpressure events. The pressure release mechanism may have an intact state and a ruptured state.

The pressure release mechanism may be constructed from and/or comprise any suitable material, including robust materials which can withstand high pressures, including PTFE thin films and carbon fibre layers. The pressure release mechanism may have a shape including a disc, circle, oval, rectangle and/or any other suitable shape which covers any suitable area. The pressure release mechanism may be suitably sized to fit between the battery pack and the vent chamber.

The inlet valve may be configured to permit flow of gas (i.e. air) from the inlet air source into the vent chamber. The inlet air source may be used to pressurise the vent chamber. The inlet air source may comprise bleed air, i.e. high-pressure compressed air from the compressors of an aircraft engine(s). The inlet air source may comprise ram air, i.e. external air pressurised by the motion of the aircraft through it.

By using bleed air and/or ram air as the inlet air source, the thermal management system can benefit from the existing systems and infrastructure of the aircraft. Redirecting bleed air to the inlet air source may be a simple and energy efficient way to pressurise the vent chamber. This may reduce the weight, complexity and maintenance of the aircraft systems by eliminating the need for additional on-board equipment.

The inlet valve may be configured to control the rate of inflow into the vent chamber, e.g. between the first and second configurations. Thus, the inlet valve may be configured to control the rate of inflow into the vent chamber to vary (e.g. increase or decrease) from the first to the second configuration.

The outflow pressure release system may be configured to regulate the pressure of the vent chamber, e.g. by varying the rate of outflow from the vent chamber.

In some examples, the inlet valve may be configured to have a fixed diameter inlet and pressure regulation of the vent chamber may be provided by the outflow pressure release system.

The pressure in the battery pack being less than the burst pressure may correspond to when the battery is operating in a steady state, i.e. under normal operation. The battery pack may have an internal pressure greater than or equal to the pressure of the vent system.

The pressure release mechanism may be configured to prevent a flow from the battery pack to the vent chamber, when the pressure in the battery pack is less than the burst pressure, by providing a fluid barrier. The pressure release mechanism may be in the intact state, so to prevent the flow from the battery pack to the vent chamber. The pressure release mechanism may provide a pressure differential between the battery pack and the vent chamber.

The pressure in the battery pack being greater than or equal to the burst pressure may correspond to an overpressure event in the battery pack. The overpressure event may occur as a result of thermal runaway in the battery. Gases may build up within the battery, increasing the internal pressure of the battery.

An overpressure event may occur as a result of blockages and/or faults elsewhere in the system, for example in at least one of the pressure release mechanism, the inlet valve, and the outflow pressure release system. Thus, a blockage and/or fault may prevent or reduce flow into and/or out of the vent chamber.

The pressure release mechanism may be configured to permit the escape of (i.e. venting of) gases from the battery pack, when the pressure in the battery pack is greater than or equal to the burst pressure. The pressure release mechanism may be configured to permit the escape of (i.e. venting of) gases from the battery pack by rupturing, i.e. causing the pressure release mechanism to transition to its ruptured state. Rupture of the pressure release mechanism may equalise a pressure differential between the battery pack and the vent chamber.

The outflow pressure release system may be configured to allow an outflow of gas to pressurise the vent chamber, when the pressure in the vent chamber is less than a release pressure.

The outflow pressure release system may be configured to allow an increased "high-flow" outflow of gas from the vent chamber to reduce the pressure in the vent chamber, when the pressure in the vent chamber is greater than or equal to the release pressure.

The thermal management system as described herein may decelerate and mitigate the thermal runaway process by providing a controlled environment for the battery pack by way of the vent chamber. The vent chamber may be pressurised whilst providing a high-flow venting function using the outflow pressure release system in response to an overpressure event in the battery.

By providing a system wherein the battery pack is in fluid communication with the vent chamber, a pressurised environment is provided for the battery pack at all times (i.e. both during steady state operation and during an overpressure event). This may protect the pressure release mechanism from rapid pressure changes which could cause accidental failure of the mechanism, e.g. unintentional rupture of a burst membrane.

Providing a pressurised environment reduces the risk of electrical partial discharge and other undesirable electrical phenomena caused by a low-pressure environment. Electrical partial discharge may lead to failure of and damage to electrical insulation, and can lead to degradation of a battery cell.

Providing a pressurised environment for the battery pack limits the mechanical strain on the burst membrane, thus reducing mechanical fatigue and improving the lifetime of the burst membrane.

Providing a system wherein the battery pack is in fluid communication with the vent chamber ensures that desirable ambient conditions for the battery pack may be achieved even in an aircraft environment. Desirable ambient conditions may be intermediate pressure and low humidity. This may prevent high voltage electronics from being exposed to potentially dangerous ambient conditions throughout all stages of flight and TTOL.

In some examples, the burst pressure may be the pressure at which the internal pressure of gas within the battery pack exceeds a first particular (e.g. pre-set) threshold. The first particular threshold may be between 400 mbar (40 kPa) to 500 mbar (50 kPa) above the pressure in the vent chamber.

For example, for an unpressurised vent chamber, an aircraft climbing to an altitude of 30,000 ft (9144 m) may reduce the pressure in the vent chamber to around 300 mbar (30 kPa). For a battery pack with an internal pressure equal to the 'ground' pressure of 1,000 mbar (100 kPa), the pressure difference between the battery pack and the vent chamber may increase to 700 mbar (70 kPa), which would result in the pressure release mechanism rupturing.

However, for a pressurised vent chamber such as the vent chamber provided according to the present invention, the pressure difference between the battery pack and the vent chamber may be reduced. For example, for a vent chamber maintained at a pressure of 800 mbar (80k Pa) to 1,000 mbar (100 kPa) and a battery pack with an internal pressure of 1,000 mbar (100 kPa), the pressure release mechanism may remain intact during aircraft ascent, e.g. to 30,000 ft (9144 m).

The burst pressure may be achieved as a result of the build-up of gases in the battery pack in a thermal runaway event. The build-up of gases may occur when the battery pack is sealed, i.e. when the pressure release mechanism is in an intact state. A thermal runaway event may be caused by at least one of the following battery conditions: manufacturing defects, physical damage, overcharging, short circuiting and exposure to extreme external temperatures.

The first particular threshold may be determined (e.g. calculated) using at least one of existing data, experimental test data, mathematical models and/or computer models. The first particular threshold may thus be predetermined.

By selecting and defining a burst pressure according to the first particular threshold, the pressure release mechanism may selectively release high-pressure gas from the battery pack. This may provide an emergency pressure release for the otherwise sealed battery pack when the internal pressure of the battery pack is abnormally high.

In some examples, the release pressure may be the pressure at which the internal pressure of the vent chamber exceeds a second particular (e.g. pre-set) threshold. The second particular threshold may be between 750 mbar (75 kPa) and 1,250 mbar (125 kPa), e.g. between 900 mbar (90 kPa) and 1,000 mbar (100 kPa). It will be appreciated that the second particular threshold may be set (e.g. calculated) based on the specific aircraft operating conditions.

The release pressure may be achieved as a result of the build-up of gases in the vent chamber. The release pressure may be achieved when the rate of inflow into the vent chamber exceeds the rate of outflow from the vent chamber. The increased rate of inflow may flow from the inlet air source and/or the battery pack.

The second particular threshold may be determined (e.g. calculated) using at least one of existing data, experimental test data, mathematical models and/or computer models. The second particular threshold may thus be predetermined.

By selecting and defining a release pressure according to the second particular threshold, the outflow pressure release system may selectively permit flow of vented gases from the battery pack to the external environment. This may provide an emergency pressure release when the internal pressure of the vented chamber is abnormally high.

In some examples, the second flow rate may be at least five times, e.g. ten times greater than the first flow rate.

By providing a second flow rate that is at least five times, e.g. at least ten times the first flow rate, the flow rate may increase considerably for a small change in pressure either side of the release pressure.

The rate of outflow of gas may only increase from the first flow rate to the second flow rate when the first flow rate is insufficient to relieve the release pressure in the vent chamber.

In some examples, the inlet valve may comprise a non-return inlet valve configured to permit flow in one direction only (from the inlet air source to the vent chamber).

The non-return inlet valve may comprise a check valve for restricting the direction of flow. The non-return inlet valve may comprise, for example, a sprung metal valve, diaphragm and/or ball mechanism. The direction of flow may be from the inlet air source into the vent chamber.

In particular, the non-return inlet valve may prevent a flow of vented battery gases and/or smoke into the inlet air source. When the inlet air source is bleed air or ram air, this may avoid pollution of the bleed or ram air source to other aircraft systems.

Using a non-return inlet valve as the inlet valve may provide a simple and reliable option for preventing undesirable fluid flow from the vent chamber into the inlet air source (i.e. backflow).

The operational pressure of the vent chamber may be the (e.g. minimum) ambient pressure required for desirable and/or safe operation of the battery pack. The operational pressure may be calculated using at least one of existing data, experimental test data, mathematical models and/or computer models. The operational pressure may be predetermined. In some examples, the operational pressure is substantially equal to the cabin pressure of the aircraft. In some examples, the operational pressure is greater than the atmospheric pressure at 8,000 ft (2,438 m).

The inlet valve and/or the outflow pressure release system may vary the rate of inflow and/or rate of outflow respectively to maintain the pressure above the operational pressure. This may ensure a consistently safe and reliable operational environment for the battery pack on the aircraft, irrespective of the aircraft ambient conditions.

In some examples, the outflow pressure release system comprises at least one valve.

By providing at least one valve in the outflow pressure release system, the thermal management system may be easily adaptable to mitigate overpressure events. In particular, this may be achieved via providing finer adjustment of the rate of outflow. Any combination of the at least one valve(s) may be opened to provide an appropriate rate of outflow in response to a range of pressures in the vent chamber.

During thermal runaway, the outflow pressure release system may be configured to respond timely to overpressure events and without excessive delay. This may be especially important during a thermal runaway event, wherein the time taken to reduce the high pressure level may be crucial in preventing dangerous fires and/or explosions.

Using at least one valve may be a simple, cost-effective and reliable way to control fluid flow.

In some examples, the at least one valve comprises an outflow valve (V3) arranged to permit flow when the pressure in the vent chamber is less than the release pressure, and an overpressure release valve (V4) arranged to permit flow when the pressure in the vent chamber is greater than or equal to the release pressure.

The outflow valve may be configured to permit variable flow for discharging pressurised air to the external environment. The outflow valve may be configured to permit the outflow of gas from the vent chamber to the external environment at up to the first flow rate.

The outflow valve may comprise an electronically controlled valve.

The outflow valve may be configured to be electrically controlled and/or actuated, e.g. to adjust the valve aperture. The outflow valve may comprise an electric feedback system. Electrical control of the outflow valve may provide for more precise and faster control, as well as increasing ease of monitoring the rate of outflow.

The outflow valve may be configured to operate pneumatically, e.g. automatically actuate based on the pressure in the vent chamber. The outflow valve may be pneumatically controlled and able to operate without an electrical connection. Pneumatic control of the outflow valve may provide for reliable control even when connected electrical systems are damaged or malfunctioning, e.g. in the case of a fire or explosion.

The overpressure release valve may be configured to permit a high flow rate for discharging pressurised air to the external environment. The overpressure release valve may have a higher (e.g. higher maximum) flow rate than the outflow valve.

Up to the first flow rate, the outflow rate provided by the outflow valve may be sufficient to maintain the pressure in the vent chamber below the release pressure. Above the first flow rate and up to the second flow rate, the outflow rate provided by the outflow valve may be insufficient to maintain the pressure in the vent chamber below the release pressure. When the pressure in the vent chamber rises above the release pressure, the overpressure release valve may open, briefly causing a sharp increase in flow rate for a small change in pressure. The sharp increase in flow rate may correspond to the difference between the second flow rate and the first flow rate. The overpressure release valve may be configured to permit the outflow of gas from the vent chamber to the external environment at greater than the second flow rate.

The overpressure release valve may comprise a solenoid valve or a burst membrane.

The overpressure release valve may be configured to be electrically controlled and/or actuated, e.g. to adjust the valve aperture. The overpressure release valve may comprise an electric feedback system. Electrical control of the overpressure release valve may provide for more precise and faster control, as well as increasing ease of monitoring the rate of outflow.

The overpressure release valve may be configured to operate pneumatically, e.g. automatically actuate based on the pressure in the vent chamber. The overpressure release valve may be pneumatically controlled and able to operate without an electrical connection. Pneumatic control of the overpressure release valve may provide for reliable control even when connected electrical systems are damaged or malfunctioning, e.g. in the case of a fire or explosion.

The outflow pressure release system may be configured such that only one the outflow valve and the overpressure release valve permits flow at any given time depending on the pressure in the vent chamber.

By providing an outflow valve and a separate overpressure release valve, the outflow pressure release system may comprise a modular configuration. This may provide for improved ease of maintenance and replacement of faulty parts.

The outflow valve and/or the overpressure release valve may be configured to be fitted with a filter to prevent dirt, particulates and/or debris entering and blocking the flow path.

In some examples, the outflow valve may be also arranged to permit flow when the pressure in the vent chamber is greater than the release pressure.

The outflow valve may be arranged to permit flow in conjunction and/or concurrently with the overpressure release valve when the pressure in the vent chamber is greater than the release pressure. The outflow valve and the overpressure release valve may both be configured to provide a combined (e.g. maximum) flow rate that is greater than the (e.g. maximum) flow rate of each of the outflow valve and the overpressure release valve individually.

By providing an outflow pressure release system wherein at least two valves are configured to permit valve at the same time when the vent chamber is greater than the release pressure, the high pressure in the vent chamber may be relieved more quickly and effectively. The (e.g. maximum) available flow rate of the outflow pressure release system may also be optimised.

In some examples, the overpressure release valve may be spring-loaded and biased towards a closed position when the pressure in the vent chamber is less than the release pressure.

The overpressure release valve may be multi-use, i.e. reusable. The overpressure release valve may be configured to be in a closed position when the spring is in an extended state, and to be in an open position when the spring is in a compressed state.

The spring may comprise any biasing member or mechanism suitable for biasing the upper portion and the lower portion away from each other. The spring may be made of spring steel, metal alloy or any other suitable material.

By providing an overpressure release valve which is configured to be in a closed position when the pressure in the vent chamber is less than the release pressure, automatic closure of the valve may be achieved pneumatically.

For example, when an overpressure event has been sufficiently mitigated (e.g. when the pressure in the vent chamber has been lowered below the release pressure), the outflow pressure release system may provide an outflow using only the outflow valve. Adequate pressurisation of the vent chamber may be achieved before, during and after an overpressure event.

By providing an overpressure release valve which is configured to be in a closed position when the pressure in the vent chamber is less than the release pressure, the overpressure release valve may be prone to fewer blockages arising from dirt and debris entering the vent chamber. In this way, more efficient operation of the thermal management system may be ensured.

In some examples, the vent chamber may comprise at least one pressure sensor configured to measure the pressure in the vent chamber. The outflow pressure release system may be configured to permit the outflow of gas from the vent chamber to the external environment at greater than the second flow rate when the at least one pressure sensor detects that the pressure in the vent chamber is greater than or equal to the release pressure.

The at least one pressure sensor may be configured to detect, based on the measured pressure in the vent chamber, whether an overpressure event (e.g. caused by thermal runaway in the battery pack) has occurred. The at least one pressure sensor may be located proximate to at least one of the outflow valve, the overpressure valve and the pressure release mechanism.

When the at least one pressure sensor is located proximate to the pressure release mechanism, the at least one pressure sensor may be configured to determine whether a burst pressure has been reached or exceeded in the battery pack.

The at least one pressure sensor may be configured to be electrically connected to at least one of the outflow valve and the overpressure release valve. The at least one pressure sensor may be configured to send an electrical (e.g. voltage) signal to control and/or actuate at least one of the outflow valve and the overpressure release valve. The at least one pressure sensor may be linked to the electric feedback system of the outflow valve and/or the overpressure release valve.

The at least one pressure sensor may be configured to communicate the pressure level in the vent chamber to a user (e.g. the pilot of the aircraft). The at least one pressure sensor may be configured to provide a status indication of the thermal management system to a user, including but not limited to "normal operation mode" and "overpressure event occurring".

By providing at least one pressure sensor configured to detect abnormally high pressures in the vent chamber, the thermal management system may provide a timely response to an overpressure event. The thermal management system may be configured to be responsive to high pressures in the vent chamber arising from blocked flow paths, mechanical failure of the pressure release mechanism and/or a thermal runaway event in the battery pack.

In some examples, the vent chamber may comprise at least one gas sensor and/or temperature sensor configured to detect (e.g. hot) gases vented from the battery pack. The outflow pressure release system may be configured to permit the outflow of gas from the vent chamber to the external environment at greater than the second flow rate when the gas sensor detects a thermal runaway gas, and/or when the temperature sensor measures the temperature in the vent chamber to be greater than or equal to a venting temperature.

The at least one gas and/or temperature sensor may be configured to detect, based on the identified gas(es) and/or measured temperature in the vent chamber, whether thermal runaway in the battery pack has occurred. The at least one gas and/or temperature sensor may be located proximate to the pressure release mechanism.

The thermal runaway gas may comprise at least one of hydrogen (H₂), carbon monoxide (CO), carbon dioxide (CO₂) and hydrocarbon gases such as methane (CH₄) and ethylene (C₂H₄).

The venting temperature may be the critical temperature required to trigger thermal runaway in the battery pack. The venting temperature may be at least between 120 °C and 150 °C.

The at least one gas and/or temperature sensor may be configured to be electrically connected to the at least one pressure sensor. The at least one gas and/or temperature sensor may be configured to send an electrical (e.g. voltage) signal to the at least one pressure valve to initiate pressure measurement(s).

The at least one gas and/or temperature sensor may be configured to communicate the identifies gas(es) and/or temperature level in the vent chamber to a user (e.g. the pilot of the aircraft). The at least one gas and/or temperature sensor may be configured to provide a status indication of the thermal management system to a user, including but not limited to "normal operation mode" and "thermal runaway event occurring".

By providing at least one gas and/or temperature sensor configured to detect thermal runaway gas(es) and/or abnormally high temperatures in the vent chamber, the thermal management system may provide a timely response to a thermal runaway event.

In some examples, there may be provided an aircraft comprising the thermal management system as described herein.

The thermal management system may be electrically and/or pneumatically connected to at least one electrical and/or pressurisation system of the aircraft respectively.

The thermal management system may be thermally insulated from the at least one electrical and/or pressurisation system of the aircraft. This may mitigate propagation and intensification of fire, and thus prevent damage to other aircraft systems in the case of a chemical fire or explosion, e.g. to thermal runaway.

The external environment of the thermal management system may be fluidly independent of and/or insulated from an aircraft passenger cabin air supply. For example, the external environment may comprise an exhaust to the atmosphere. This may prevent inhalation of hot noxious gases and/or smoke released during venting of the battery pack, and prevent deflagration of flammable gases within an aircraft cabin. Passenger safety may thus be ensured even in the case of thermal runaway. Providing a thermal management system that is fluidly separate from the aircraft passenger cabin may also enable the two systems to be independently operable, e.g. operable at different pressures.

According to the present invention, there is provided a method of operating a thermal management system for high-flow venting of a battery pack, the method comprising: blocking a flow from the battery pack to a vent chamber when the pressure in the battery pack is less than a burst pressure, or relieving the burst pressure from the battery pack to the vent chamber when the pressure in the battery pack is greater than or equal to the burst pressure; permitting an outflow of gas from the vent chamber to an external environment at up to a first flow rate when the pressure in the vent chamber is less than a release pressure; and permitting an outflow of gas from the vent chamber to the external environment at greater than a second flow rate when the pressure in the vent chamber is greater than or equal to the release pressure; wherein the second flow rate is greater than the first flow rate. The method further comprises balancing the rate of inflow into the vent chamber with the rate of outflow from the vent chamber.

In some examples, the method may further comprise detecting with at least one pressure sensor that the pressure in the vent chamber is greater than or equal to the release pressure in order to permit the outflow of gas from the vent chamber to the external environment at greater than a second flow rate.

It will be appreciated that all the feature of the system described herein may equally apply to the method described herein, and vice versa.

Features of any aspect or example described herein may, wherever appropriate, be applied to any other aspect or example described herein. Where reference is made to different examples or sets of examples, it should be understood that these are not necessarily distinct but may overlap.

### BRIEF DESCRIPTION OF THE DRAWINGS

One or more non-limiting examples will now be described, by way of example only, and with reference to the accompanying figures in which:
Figure 1 shows a thermal management system for an aircraft battery pack;
Figure 2 shows a process flow diagram for operating the system of Figure 1.

### DETAILED DESCRIPTION

The examples described herein are used for thermal regulation and management of battery packs in aircraft, but other applications (e.g. marine and aeronautical applications) are also envisaged and the examples are not limited to this use.

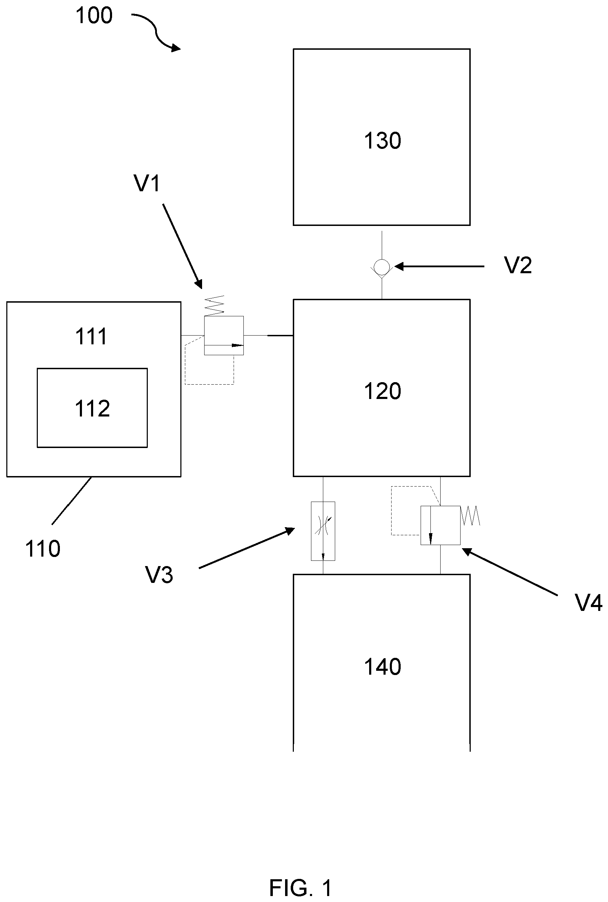

Figure 1 shows a thermal management system 100 for high-flow venting of a battery pack, e.g. on an aircraft. The thermal management system 100 comprises at least a battery pack 110, a vent chamber 120, an inlet air source 130 and an external environment 140. The thermal management system 100 further comprises a plurality of valves including at least a pressure release mechanism V1, an inlet valve V2, an outflow valve V3 and an overpressure release valve V4.

The battery pack 110 comprises a housing 111 containing at least one battery cell 112. The number and type of battery cells included in the battery pack 110 may depend on the desired power and voltage requirements for the particular application.

The vent chamber 120 comprises a housing defining a chamber that is physically separate from the battery pack 110. The pressure release mechanism V1 fluidly couples the battery pack 110 and the vent chamber 120, thus providing a vent path between the battery pack 110 and the vent chamber 120. The vent chamber 120 and the battery pack 110 are in fluid communication with each other only through the vent path.

The pressure release mechanism V1 is a burst membrane that is configured to either block or permit fluid flow from the battery pack 110 into the vent chamber 120. The pressure release mechanism V1 is configured to activate (i.e. rupture) in response to a thermal event in the battery pack 110 (thus opening the vent path between the battery pack 110 and the vent chamber 120), and to remain intact under normal operating conditions (thus preventing fluid flow along the vent path).

The inlet valve V2 fluidly couples the inlet air source 130 and the vent chamber 120. The inlet air source 130 is pressurised bleed air and/or ram air, e.g. from the compressors and/or turbines of the aircraft's engine(s). The inlet valve V2 is a non-return inlet valve, and is configured to permit fluid flow in one direction only, i.e. to selectively permit fluid flow from the inlet air source 130 into the vent chamber 120 whilst preventing fluid flow from the vent chamber 120 into the inlet air source 130.

The outflow valve V3 and the overpressure release valve V4 provide an outflow pressure release function for the vent chamber. Both the outflow valve V3 and the overpressure release valve V4 fluidly couple the vent chamber 120 to the external environment 140. The outflow valve V3 and the release valve V4 are connected in parallel to each other between the vent chamber 120 and the external environment 140. The external environment is physically separate from the vent chamber 120 and the battery pack 110.

The inlet valve V2 together with the outflow valve V3, and optionally the overpressure release valve V4, maintain pressurisation of the vent chamber 120 by providing an inflow of air and regulating the outflow of air.

The outflow valve V3 and the overpressure release valve V4 are configured to provide a high-flow venting function for the vent chamber 120 when the battery pack 110 undergoes thermal runaway in order to reduce the pressure in the vent chamber 120.

During a thermal runaway event, a rise in temperature may accelerate an exothermic process, resulting in further uncontrollable and self-sustaining increases in temperature. Rapid increases in the reaction rate of the process may be triggered when the rate of heat generated exceeds the rate of heat dissipated. Thermal runaway in batteries may be precipitated owing to the occurrence, for example, of manufacturing defects, physical damage, overcharging, short circuiting and exposure to extreme external temperatures.

Thus, a rise in battery temperature may lead to an increased rate of exothermic reactions within the battery, releasing the stored chemical energy. This may further increase both the temperature and pressure of the battery in a chain reaction, leading to an overpressure event in the battery.

A burst pressure is defined as the pressure required to activate (i.e. rupture) the burst membrane, which initiates high-flow venting of the vent chamber 120. The battery pack 110 may exist in two states. When the battery pack 110 is operating in a steady state, i.e. under normal operation, the pressure in the battery pack is less than the burst pressure. When there is an overpressure event in the battery pack 110, the pressure in the battery pack may be greater than or equal to the burst pressure.

Under normal operation of the battery pack 110, the pressure release mechanism V1 is configured to prevent a flow from the battery pack 110 to the vent chamber 120 by providing a fluid barrier, resulting in a pressure differential between the battery pack 110 and the vent chamber 120. The outflow valve V3 is configured to permit the outflow of gas from the vent chamber 120 to the external environment 140 at up to a first flow rate. The overpressure release valve V4 is closed, i.e. non-operational.

When there is an overpressure event in the battery pack 110, the pressure release mechanism V1 is configured to permit the escape of (i.e. venting of) gases from the battery pack 110, equalising the pressure differential between the battery pack 110 and the vent chamber 120. The outflow valve V3 is configured to permit the outflow of gas from the vent chamber 120 to the external environment 140 at an increased flow rate. In addition, the overpressure release valve V4 is opened to further increase the flow rate. The combined increased flow rate from both the outflow valve V3 and the overpressure release valve V4 is greater than a second flow rate.

Up to the first flow rate, the outflow rate provided by the outflow valve V3 is sufficient to maintain the pressure in the vent chamber below a defined release pressure. Above the first flow rate and up to the second flow rate, the outflow rate provided by the outflow valve V3 is insufficient to maintain the pressure in the vent chamber below the release pressure.

When the pressure in the vent chamber rises above the release pressure, the overpressure release valve V4 opens, briefly causing a sharp increase in flow rate for a small change in pressure. This sharp increase brings the flow rate up to the second flow rate. The second flow rate is at least five times, e.g. at least ten times greater than the first flow rate. The overpressure release valve is configured to permit the outflow of gas from the vent chamber to the external environment at greater than the second flow rate.

By venting the gases produced from the exothermic reactions in the battery pack at a high (i.e. greater than the second) flow rate, the internal pressure and temperature of the battery are thus reduced. This limits the chances of deflagration of flammable gases, which could result in thermal hazards such as chemical fires and/or explosions.

The overpressure release valve V4 is spring-loaded and biased towards a closed position under normal operation of the battery pack 110, to prevent blockages from dirt and debris entering the vent chamber from the external environment.

At least one pressure sensor is located proximate to at least one of the pressure release mechanism V1, the outflow valve V3 and the overpressure release valve V4, and is configured to detect, based on the measured pressure in the vent chamber, whether an overpressure event has occurred. The at least one pressure sensor is configured to send an electrical signal to actuate the overpressure release valve V4.

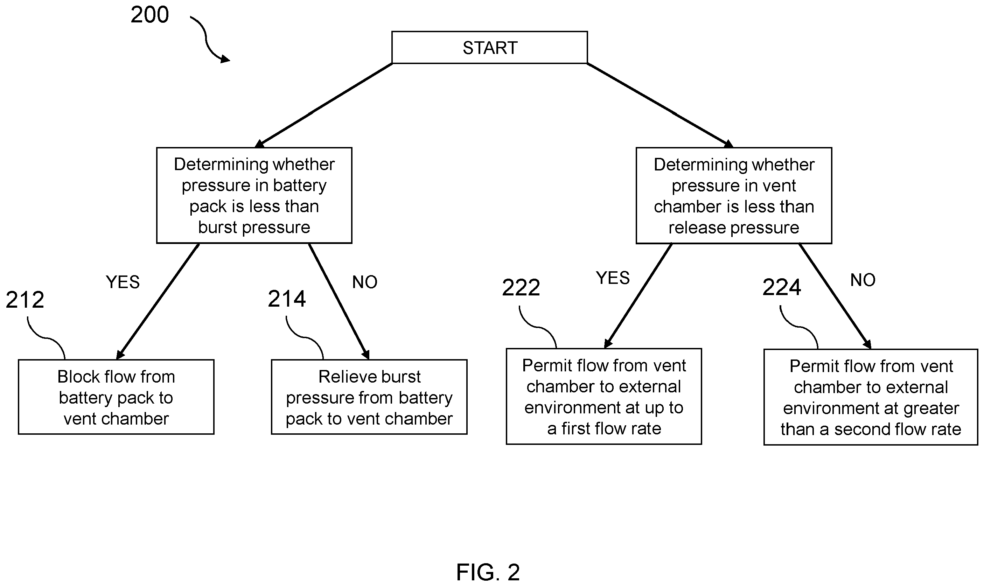

Figure 2 shows a method 200 of operating the thermal management system 100. The method 200 comprises method steps for determining whether the pressure in the battery pack is less than the burst pressure, and whether the pressure in the vent chamber is less than the release pressure.

The method 200 comprises the step 212 of blocking a flow from the battery pack 110 to a vent chamber 120 when the pressure in the battery pack is less than the burst pressure.

The method 200 further comprises the step 214 of relieving the burst pressure from the battery pack 110 to the vent chamber 120 when the pressure in the battery pack is greater than or equal to the burst pressure.

The method 200 further comprises the step 222 of permitting an outflow of gas from the vent chamber 120 to the external environment 140 at up to the first flow rate when the pressure in the vent chamber is less than the release pressure.

The method 200 further comprises the step 224 of permitting an outflow of gas from the vent chamber 120 to the external environment 140 at greater than the second flow rate when the pressure in the vent chamber is greater than or equal to the release pressure. The second flow rate is greater than the first flow rate.

It will be appreciated by those skilled in the art that the invention has been illustrated by describing one or more specific examples thereof, but is not limited to these examples; many variations and modifications are possible, within the scope of the accompanying claims.

## Claims

1. A thermal management system (100) for high-flow venting of a battery pack (110), the thermal management system comprising:
a vent chamber (120);
a pressure release mechanism (V1);
a connection for a battery pack to be connected to the vent chamber via the pressure release mechanism;
an inlet valve (V2) for connecting an inlet air source (130) to the vent chamber;
an outflow pressure release system (V3, V4) for connecting the vent chamber to an external environment (140);
wherein the outflow pressure release system is configured to:
permit an outflow of gas from the vent chamber to the external environment at up to a first flow rate when the pressure in the vent chamber is less than a release pressure; and
permit an outflow of gas from the vent chamber to the external environment at greater than a second flow rate when the pressure in the vent chamber is greater than or equal to the release pressure;
wherein the second flow rate is greater than the first flow rate;
**characterised in that** the inlet valve and the outflow pressure release system are configured to maintain the pressure in the vent chamber above an operational pressure.

2. The thermal management system as claimed in claim 1, wherein the pressure release mechanism is configured to:
block a flow from the battery pack to the vent chamber when the pressure in the battery pack is less than a burst pressure; and
relieve the burst pressure from the battery pack to the vent chamber when the pressure in the battery pack is greater than or equal to the burst pressure.

3. The thermal management system as claimed in claim 1 or 2, wherein the burst pressure is the pressure at which the internal pressure of gas within the battery pack exceeds a first particular threshold; and/or
wherein the release pressure is the pressure at which the internal pressure of the vent chamber exceeds a second particular threshold.

4. The thermal management system as claimed in claim 1, 2 or 3, wherein the second flow rate is at least five times, e.g. at least ten times greater than the first flow rate.

5. The thermal management system as claimed in any one of the preceding claims, wherein the inlet valve comprises a non-return inlet valve configured to permit flow in one direction only.

6. The thermal management system as claimed in any one of the preceding claims, wherein the outflow pressure release system comprises at least one valve.

7. The thermal management system as claimed in claim 6, wherein the at least one valve comprises:
an outflow valve (V3) arranged to permit flow when the pressure in the vent chamber is less than the release pressure, and
an overpressure release valve (V4) arranged to permit flow when the pressure in the vent chamber is greater than or equal to the release pressure.

8. The thermal management system as claimed in claim 7, wherein the outflow valve is arranged to permit flow when the pressure in the vent chamber is greater than the release pressure.

9. The thermal management system as claimed in claim 7 or 8, wherein the overpressure release valve is spring-loaded and biased towards a closed position when the pressure in the vent chamber is less than the release pressure.

10. The thermal management system as claimed in any one of the preceding claims, wherein the vent chamber comprises at least one pressure sensor configured to measure the pressure in the vent chamber; and
wherein the outflow pressure release system is configured to permit the outflow of gas from the vent chamber to the external environment at greater than the second flow rate when the at least one pressure sensor detects that the pressure in the vent chamber is greater than or equal to the release pressure.

11. The thermal management system as claimed in any one of the preceding claims, wherein the vent chamber comprises at least one gas sensor and/or a temperature sensor configured to detect gases vented from the battery pack;
wherein the outflow pressure release system is configured to permit the outflow of gas from the vent chamber to the external environment at greater than the second flow rate when:
the gas sensor detects a thermal runaway gas; and/or
the temperature sensor measures the temperature in the vent chamber to be greater than or equal to a venting temperature.

12. An aircraft comprising the thermal management system as claimed in any one of the preceding claims.

13. A method (200) of operating a thermal management system for high-flow venting of a battery pack, the method comprising:
blocking (212) a flow from the battery pack to a vent chamber (120) when the pressure in the battery pack is less than a burst pressure, or
relieving (214) the burst pressure from the battery pack to the vent chamber when the pressure in the battery pack is greater than or equal to the burst pressure;
permitting (222) an outflow of gas from the vent chamber to an external environment (140) at up to a first flow rate when the pressure in the vent chamber is less than a release pressure; and
permitting (224) an outflow of gas from the vent chamber to the external environment at greater than a second flow rate when the pressure in the vent chamber is greater than or equal to the release pressure;
wherein the second flow rate is greater than the first flow rate;
**characterised in that** the method further comprises maintaining the pressure in the vent chamber above an operational pressure.

14. The method as claimed in claim 13, wherein the method further comprises detecting with at least one pressure sensor that the pressure in the vent chamber is greater than or equal to the release pressure in order to permit the outflow of gas from the vent chamber to the external environment at greater than a second flow rate.

## Patentansprüche

1. Ein Wärmemanagementsystem (100) zur Hochdurchfluss-Entlüftung eines Batteriepacks (110),
wobei das Wärmemanagementsystem Folgendes umfasst:
eine Entlüftungskammer (120);
einen Druckentlastungsmechanismus (V1);
eine Verbindung für ein Batteriepack, das mit der Entlüftungskammer über den Druckentlastungsmechanismus verbunden werden kann;
ein Einlassventil (V2) zum Verbinden einer Einlassluftquelle (130) mit der Entlüftungskammer;
ein Abströmdruckentlastungssystem (V3, V4) zum Verbinden der Entlüftungskammer mit einer äußeren Umgebung (140);
wobei das Abströmdruckentlastungssystem dazu konfiguriert ist:
ein Abströmen von Gas aus der Entlüftungskammer zur äußeren Umgebung mit bis zu einer ersten Durchflussrate zu ermöglichen, wenn der Druck in der Entlüftungskammer geringer ist als ein Freigabedruck; und
ein Abströmen von Gas aus der Entlüftungskammer zur äußeren Umgebung mit mehr als einer zweiten Durchflussrate zu ermöglichen,
wenn der Druck in der Entlüftungskammer größer oder gleich dem
Freigabedruck ist;
wobei die zweite Durchflussrate größer ist als die erste Durchflussrate;
**dadurch gekennzeichnet, dass** das Einlassventil und das Abströmdruckentlastungssystem
dazu konfiguriert sind, den Druck in der Entlüftungskammer über einem Betriebsdruck zu halten.

2. Das Wärmemanagementsystem nach Anspruch 1, wobei der Druckentlastungsmechanismus dazu konfiguriert ist:
einen Fluss vom Batteriepack zur Entlüftungskammer zu blockieren, wenn der Druck im Batteriepack geringer ist als ein Berstdruck; und
den Berstdruck vom Batteriepack zur Entlüftungskammer zu entlasten,
wenn der Druck im Batteriepack größer oder gleich dem Berstdruck ist.

3. Das Wärmemanagementsystem nach Anspruch 1 oder 2, wobei der Berstdruck der Druck ist, bei dem der Innendruck des Gases innerhalb des Batteriepacks einen ersten bestimmten Schwellenwert übersteigt; und/oder
wobei der Freigabedruck der Druck ist, bei dem der Innendruck der Entlüftungskammer einen zweiten bestimmten Schwellenwert übersteigt.

4. Das Wärmemanagementsystem nach Anspruch 1, 2 oder 3, wobei die zweite Durchflussrate mindestens fünfmal, z. B. mindestens zehnmal größer ist als die erste Durchflussrate.

5. Das Wärmemanagementsystem nach einem der vorhergehenden Ansprüche, wobei das Einlassventil ein Rückschlag-Einlassventil umfasst, das dazu konfiguriert ist, einen Fluss nur in eine Richtung zu ermöglichen.

6. Das Wärmemanagementsystem nach einem der vorhergehenden Ansprüche, wobei das Abströmdruckentlastungssystem mindestens ein Ventil umfasst.

7. Das Wärmemanagementsystem nach Anspruch 6, wobei das mindestens eine Ventil Folgendes umfasst:
ein Abströmventil (V3), das so angeordnet ist, dass es einen Fluss ermöglicht, wenn der Druck in der Entlüftungskammer geringer ist als der Freigabedruck, und
ein Überdruckentlastungsventil (V4), das so angeordnet ist, dass es einen Fluss ermöglicht, wenn der Druck in der Entlüftungskammer größer oder gleich dem Freigabedruck ist.

8. Das Wärmemanagementsystem nach Anspruch 7, wobei das Abströmventil so angeordnet ist, dass es einen Fluss ermöglicht, wenn der Druck in der Entlüftungskammer größer ist als der Freigabedruck.

9. Das Wärmemanagementsystem nach Anspruch 7 oder 8, wobei das Überdruckentlastungsventil federbelastet ist und in eine geschlossene Position vorgespannt wird, wenn der Druck in der Entlüftungskammer geringer ist als der Freigabedruck.

10. Das Wärmemanagementsystem nach einem der vorhergehenden Ansprüche, wobei die Entlüftungskammer mindestens einen Drucksensor umfasst, der dazu konfiguriert ist, den Druck in der Entlüftungskammer zu messen; und
wobei das Abströmdruckentlastungssystem dazu konfiguriert ist, das Abströmen von Gas aus der Entlüftungskammer zur äußeren Umgebung mit mehr als
der zweiten Durchflussrate zu ermöglichen, wenn der mindestens eine Drucksensor erfasst, dass der Druck in der Entlüftungskammer größer oder gleich dem Freigabedruck ist.

11. Das Wärmemanagementsystem nach einem der vorhergehenden Ansprüche, wobei die Entlüftungskammer mindestens einen Gassensor und/oder einen Temperatursensor umfasst, der dazu konfiguriert ist, aus dem Batteriepack entlüftete Gase zu erfassen;
wobei das Abströmdruckentlastungssystem dazu konfiguriert ist, das Abströmen von Gas aus der Entlüftungskammer zur äußeren Umgebung mit mehr als der zweiten Durchflussrate zu ermöglichen, wenn:
der Gassensor ein Gas eines thermischen Durchgehens erfasst; und/oder
der Temperatursensor misst, dass die Temperatur in der Entlüftungskammer größer oder gleich einer Entlüftungstemperatur ist.

12. Ein Luftfahrzeug, umfassend das Wärmemanagementsystem nach einem der vorhergehenden Ansprüche.

13. Ein Verfahren (200) zum Betreiben eines Wärmemanagementsystems zur Hochdurchfluss-Entlüftung eines Batteriepacks, wobei das Verfahren Folgendes umfasst:
Blockieren (212) eines Flusses vom Batteriepack zu einer Entlüftungskammer (120), wenn der Druck im Batteriepack geringer ist als ein Berstdruck, oder
Entlasten (214) des Berstdrucks vom Batteriepack zur Entlüftungskammer, wenn der Druck im Batteriepack größer oder gleich dem Berstdruck ist;
Ermöglichen (222) eines Abströmens von Gas aus der Entlüftungskammer zu einer äußeren Umgebung (140) mit bis zu einer ersten Durchflussrate, wenn der Druck in der Entlüftungskammer geringer ist als ein Freigabedruck; und
Ermöglichen (224) eines Abströmens von Gas aus der Entlüftungskammer zur äußeren Umgebung mit mehr als einer zweiten Durchflussrate, wenn der Druck in der Entlüftungskammer größer oder gleich dem Freigabedruck ist;
wobei die zweite Durchflussrate größer ist als die erste Durchflussrate;
**dadurch gekennzeichnet, dass** das Verfahren ferner das Halten des Drucks in der Entlüftungskammer über einem Betriebsdruck umfasst.

14. Das Verfahren nach Anspruch 13, wobei das Verfahren ferner das Erfassen mit mindestens einem Drucksensor umfasst, dass der Druck in der Entlüftungskammer größer oder gleich dem Freigabedruck ist, um das Abströmen von Gas aus der Entlüftungskammer zur äußeren Umgebung mit mehr als einer zweiten Durchflussrate zu ermöglichen.

## Revendications

1. Système de gestion thermique (100) pour la ventilation à haut débit d'un bloc-batterie (110), le système de gestion thermique comprenant :
une chambre de ventilation (120) ;
un mécanisme de décharge de pression (V1) ;
un raccordement pour un bloc-batterie destiné à être connecté à la chambre de ventilation par l'intermédiaire du mécanisme de décharge de pression ;
une vanne d'entrée (V2) pour connecter une source d'air d'entrée (130) à la chambre de ventilation ;
un système de décharge de pression de sortie (V3, V4) pour connecter la chambre de ventilation à un environnement extérieur (140) ;
dans lequel le système de décharge de pression de sortie est configuré pour :
permettre une sortie de gaz de la chambre de ventilation vers l'environnement extérieur jusqu'à un premier débit lorsque la pression dans la chambre de ventilation est inférieure à une pression de déclenchement ; et
permettre une sortie de gaz de la chambre de ventilation vers l'environnement extérieur à un débit supérieur à un second débit lorsque la pression dans la chambre de ventilation est supérieure ou égale à la pression de déclenchement ;
dans lequel le second débit est supérieur au premier débit ;
**caractérisé en ce que** la vanne d'entrée et le système de décharge de pression de sortie sont configurés pour maintenir la pression dans la chambre de ventilation au-dessus d'une pression opérationnelle.

2. Le système de gestion thermique selon la revendication 1, dans lequel le mécanisme de décharge de pression est configuré pour :
bloquer un écoulement du bloc-batterie vers la chambre de ventilation lorsque la pression dans le bloc-batterie est inférieure à une pression d'éclatement ; et
relâcher la pression d'éclatement du bloc-batterie vers la chambre de ventilation lorsque la pression dans le bloc-batterie est supérieure ou égale à la pression d'éclatement.

3. Le système de gestion thermique selon la revendication 1 ou 2, dans lequel la pression d'éclatement est la pression à laquelle la pression interne de gaz au sein du bloc-batterie dépasse un premier seuil déterminé ; et/ou
dans lequel la pression de déclenchement est la pression à laquelle la pression interne de la chambre de ventilation dépasse un second seuil déterminé.

4. Le système de gestion thermique selon la revendication 1, 2 ou 3, dans lequel le second débit est au moins cinq fois, par exemple au moins dix fois supérieur au premier débit.

5. Le système de gestion thermique selon l'une quelconque des revendications précédentes, dans lequel la vanne d'entrée comprend une vanne d'entrée anti-retour configurée pour permettre un écoulement dans un seul sens.

6. Le système de gestion thermique selon l'une quelconque des revendications précédentes, dans lequel le système de décharge de pression de sortie comprend au moins une vanne.

7. Le système de gestion thermique selon la revendication 6, dans lequel ladite au moins une vanne comprend :
une vanne de sortie (V3) agencée pour permettre un écoulement lorsque la pression dans la chambre de ventilation est inférieure à la pression de déclenchement, et
une vanne de décharge de surpression (V4) agencée pour permettre un écoulement lorsque la pression dans la chambre de ventilation est supérieure ou égale à la pression de déclenchement.

8. Le système de gestion thermique selon la revendication 7, dans lequel la vanne de sortie est agencée pour permettre un écoulement lorsque la pression dans la chambre de ventilation est supérieure à la pression de déclenchement.

9. Le système de gestion thermique selon la revendication 7 ou 8, dans lequel la vanne de décharge de surpression est à ressort et sollicitée vers une position fermée lorsque la pression dans la chambre de ventilation est inférieure à la pression de déclenchement.

10. Le système de gestion thermique selon l'une quelconque des revendications précédentes, dans lequel la chambre de ventilation comprend au moins un capteur de pression configuré pour mesurer la pression dans la chambre de ventilation ; et
dans lequel le système de décharge de pression de sortie est configuré pour permettre la sortie de gaz de la chambre de ventilation vers l'environnement extérieur à un débit supérieur au
second débit lorsque ledit au moins un capteur de pression détecte que la pression dans la chambre de ventilation est supérieure ou égale à la pression de déclenchement.

11. Le système de gestion thermique selon l'une quelconque des revendications précédentes, dans lequel la chambre de ventilation comprend au moins un capteur de gaz et/ou un capteur de température configuré pour détecter des gaz évacués du bloc-batterie ;
dans lequel le système de décharge de pression de sortie est configuré pour permettre la sortie de gaz de la chambre de ventilation vers l'environnement extérieur à un débit supérieur au second débit lorsque :
le capteur de gaz détecte un gaz d'emballement thermique ; et/ou
le capteur de température mesure que la température dans la chambre de ventilation est supérieure ou égale à une température de ventilation.

12. Un aéronef comprenant le système de gestion thermique selon l'une quelconque des revendications précédentes.

13. Procédé (200) de fonctionnement d'un système de gestion thermique pour la ventilation à haut débit d'un bloc-batterie, le procédé comprenant :
le blocage (212) d'un écoulement du bloc-batterie vers une chambre de ventilation (120) lorsque la pression dans le bloc-batterie est inférieure à une pression d'éclatement, ou
le relâchement (214) de la pression d'éclatement du bloc-batterie vers la chambre de ventilation lorsque la pression dans le bloc-batterie est supérieure ou égale à la pression d'éclatement ;
le fait de permettre (222) une sortie de gaz de la chambre de ventilation vers un environnement extérieur (140) jusqu'à un premier débit lorsque la pression dans la chambre de ventilation est inférieure à une pression de déclenchement ; et
le fait de permettre (224) une sortie de gaz de la chambre de ventilation vers l'environnement extérieur à un débit supérieur à un second débit lorsque la pression dans la chambre de ventilation est supérieure ou égale à la pression de déclenchement ;
dans lequel le second débit est supérieur au premier débit ;
**caractérisé en ce que** le procédé comprend en outre le maintien de la pression dans la chambre de ventilation au-dessus d'une pression opérationnelle.

14. Le procédé selon la revendication 13, dans lequel le procédé comprend en outre la détection, par au moins un capteur de pression, du fait que la pression dans la chambre de ventilation est supérieure ou égale à la pression de déclenchement afin de permettre la sortie de gaz de la chambre de ventilation vers l'environnement extérieur à un débit supérieur à un second débit.
